# EUROPÄISCHE PATENTSCHRIFT

(11) **EP 2 225 931 B1**
(45) Veröffentlichungstag und Bekanntmachung des Hinweises auf die Patenterteilung: **09.05.2012**
(21) Anmeldenummer: 10152346.2
(22) Anmeldetag: 02.02.2010
(51) Int. Cl.: A01F 29/09, A01D 43/08

(54) **Landwirtschaftliche Erntemaschine**
Agricultural harvester
Moissonneuse agricole

(30) Priorität: 02.03.2009 DE 102009011035
(43) Veröffentlichungstag der Anmeldung: 08.09.2010
(73) Patentinhaber: CLAAS Selbstfahrende Erntemaschinen GmbH, 33428 Harsewinkel (DE)
(72) Erfinder: Diekhans, Norbert, Dr., 33335, Gütersloh (DE); Kriebel, Bastian, 48155, Münster (DE)

(56) Entgegenhaltungen:
- EP-A1- 2 008 508
- EP-A2- 1 522 214
- DE-C1- 19 903 153

## Beschreibung

Die Erfindung betrifft eine landwirtschaftliche Erntemaschine, insbesondere einen selbstfahrenden Feldhäcksler mit einer Häckselmesser aufweisenden Häckseltrommel, einer der Häckseltrommel zugeordneten Schleifvorrichtung mit einem Schleifwerkzeug zum Schleifen der Häckselmesser nach dem Oberbegriff des Anspruchs 1.

Während des Arbeitsprozesses des Feldhäckslers nutzen sich die an der Häckseltrommel befestigten Messer mit zunehmender Betriebsdauer ab. Die Schneidschärfe der Messer bei einem Feldhäcksler hat einen starken Einfluss auf die Betriebskosten der Erntemaschine. Werden diese nur selten geschliffen, nimmt die Effizienz der Erntmaschine ab, so dass die Kosten aufgrund des erhöhten Energiebedarfs steigen. Zu häufiges Schleifen der Messer führt allerdings zu einem erhöhten Messerverschleiß und erfordert ein früheres Austauschen der Messer, welches ebenfalls die Betriebskosten erhöht. Die Beurteilung, ob die Schneiden der Messer scharf genug sind oder ob sie geschliffen werden müssen, hängt nicht nur von der objektiven Schärfe der Schneiden ab, sondern auch von Randbedingungen, wie etwa der Art des Erntegutes, der Größe einer noch abzuerntenden Fläche, der dafür verfügbaren Zeit, der Betriebstunden der Erntemaschine, etc.. Solche Kriterien können bei der aus EP 1 522 214 A2 bekannten Erntemaschine nicht berücksichtigt werden; wenn der Schleifvorgang automatisch ausgelöst wird, muss der Bediener ihn hinnehmen und falls die Maschine ein Signal erzeugt, um den Bediener aufzufordern, einen Schleifvorgang auszulösen, ist es für den Bediener kaum möglich zu beurteilen, ob der Schleifvorgang aufgeschoben werden kann oder nicht.

In der DE 199 03 153 C wird vorgeschlagen, die Schleifintervalle in Abhängigkeit vom Verschleißzustand einzelner Häckselmesser, erfasst durch die Messung der Belastung der Gegenschneide entgegen der Flussrichtung des Gutstroms und quer zur Flussrichtung des Gutstroms, zu regeln. Falls der ermittelte Verschleißzustand auf stumpfe Messer hinweist, wird dem Benutzer eine entsprechende Mitteilung gemacht bzw. selbsttätig der Gutfluss gestoppt oder die Gegenschneide verstellt oder ein Schleifvorgang eingeleitet.

Die DE 103 57 177 A1 offenbart eine Schleifvorrichtung einer Häckseleinrichtung eines Feldhäckslers, wobei die Schleifintervalle zur Schärfung der Häckselmesser hierbei in Abhängigkeit von der Betriebsdauer der Häckselmesser erfolgen.

Nachteilig an allen bisherigen Ausführungsformen ist, dass das automatische Feststellen der realen Schneidschärfe sämtlicher Messer derzeit kaum möglich ist, so dass der Bediener in der Praxis weiterhin in der Regel manuell die Schneidschärfe der Häckselmesser kontrollieren muss und das Schleifintervalle und Schleifzyklen gewählt werden, die oftmals nicht dem realen Verschleiß der Messer entsprechen, welches sich insgesamt negativ auf die Betriebskosten der landwirtschaftlichen Erntemaschine auswirkt.

Es ist daher Aufgabe der Erfindung, die Nachteile des zitierten Standes der Technik zu vermeiden und eine Optimierung des Messerschleifprozesses dahingehend zu realisieren, dass einerseits der Bediener von der manuellen Überprüfung der Messerschärfe entlastet und andererseits eine Optimierung der Betriebskosten erreicht wird.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem wenigstens eine Speicher- und Auswerteeinheit vorgesehen ist, die anhand wenigstens eines während des Erntebetriebes ermittelten Erntegut- und/oder Maschinenparameters eine Prognose über den Verschleiß der Häckselmesser ableitet, ist der Bediener vorteilhaft über den zu erwartenden Verschleißverlauf der Häckselmesser informiert, so dass er von der manuellen Überprüfung der Schneidschärfe der Häckselmesser entlastet wird und kann entsprechend des prognostizierten Messerverschleißes, das Schleifen der Häckselmesser bewirken kann, welches insgesamt zu einer Optimierung der Betriebskosten der Erntemaschine führt.

In vorteilhafter Weiterbildung der Erfindung ist in einer Speicher- und Auswerteeinheit wenigstens ein Referenz-Vergleichswert über einen Häckselmesserverschleiß weiderabrufbar hinterlegt, der durch wenigstens einen Erntegut- und/oder Maschinenparameter definiert wird, wobei der Vergleichswert einen Startpunkt und eine Verschleißgrenze der Häckselmesser darstellt, die einen Bereich einer akzeptablen Mindestgüte der Häckselmesser auf der Basis der Eigenschaften bekannter Häckselmesser repräsentiert. Es liegt im Rahmen der Erfindung, dass der Bereich der akzeptablen Mindestgüte für jeden Satz Häckselmesser unter Berücksichtigung von definierten Erntegut- und/oder Maschinenparameter individuell bestimmt wird. Dadurch ist sichergestellt, dass solange die Nutzung der Messer innerhalb des Bereichs vom Startpunkt bis zur Verschleißgrenze erfolgt, die Messer eine ausreichende Schneidschärfe aufweisen. Vorteilhaft wird der wenigstens eine den Referenz-Verschleißwert definierende Erntegut- und/oder Maschinenparameter durch die Parameter Erntegutart und/oder Erntegutdurchsatz und/oder die gewählte Erntegutschnittlänge gebildet, da diese Parameter einen hohen Einfluss auf den Verschleißverlauf der Häckselmesser haben. Grundsätzlich definiert der Startpunkt den Zustand neuer beziehungsweise geschliffener und noch nicht benutzter Häckselmesser. Sollte der Startpunkt einen dieser Zustände nicht widerspiegeln und die Messer bereits einen Verschleiß aufweisen, ist es denkbar, dass dies bei der Prognose über den zu erwartenden Verschleiß der Messer mit berücksichtigt wird, damit der prognostizierte Verschleiß der Messer auch mit dem realen Verschleißverlauf der Messer korrespondiert.

Ein sehr exakter Verschleiß der Häckselmesser ist prognostizierbar, wenn der widerabrufbar hinterlegte Referenz-Verschleißwert auf Expertenwissen beruht, welches insbesondere das Wissen von erfahrenen Bedienern der Erntemaschine berücksichtigt. Denkbar ist zudem, dass mittels Testversuche die Referenzwerte ermittelt worden sind.

In einer vorteilhaften Weiterbildung der Erfindung wird der in einer Speicher- und Auswerteeinheit hinterlegte Referenz-Verschleißwert durch einen, den aktuellen Erntebetrieb berücksichtigenden Verschleißfaktor korrigiert, so dass ein sehr exakter, die realen Erntebedingungen berücksichtigender Häckselmesserverschleiß prognostizierbar ist. Vorteilhaft erfasst der wenigstens eine Verschleißfaktor wenigstens einen der Parameter Erntegutart und/oder Erntegutdurchsatz und/oder Erntegutschnittlänge, die auf das Ausmaß des Messerverschleißes eine große Auswirkung haben. Weitere Qualitätskriterien oder Einflussgrößen auf den zu erwartenden Verschleiß können durch geeignete Messsysteme erfasst und in die Prognose einbezogen werden.

Dadurch, dass die durch die Speicher- und Auswerteeinheit abgeleitete Prognose für den Häckselmesserverschleiß aufgrund von dynamischen, im Erntebetrieb ermittelten Informationen korrigierbar ist, erhält der Bediener vorteilhaft eine Messerverschleißprognose, die auch sich im Erntebetrieb verändernde Parameter, wie z.B. Änderung der Erntegutfeuchte oder Emtegutdurchsatz, berücksichtigt.

Für den erfahrenen Bediener erweist es sich als vorteilhaft, dass über ein mit der Speicher- und Auswerteeinheit in Verbindung stehendes Eingabemittel die abgeleitete Prognose manuell korrigierbar ist, so dass dieser hinsichtlich der Prognose über den Messerverschleiß Anpassungen vornehmen kann, damit auch solche Parameter mit in die Prognose über den zu erwartenden Häckselmesserverschleiß einfließen, die insbesondere nicht von Erntegutparametern und/oder von Maschinenparametern abhängen, wie beispielsweise der Umstand, dass der Emtegutbestand mit überdurchschnittlich viel Sand behaftet ist, welches zu einem erhöhten Messerverschleiß führt.

In einer vorteilhaften Weiterbildung der Erfindung wird die abgeleitete Prognose über den Häckselmesserverschleiß dem Bediener auf einer in einer Fahrerkabine der Erntemaschine angeordneten Anzeigeeinheit zur Anzeige gebracht, so dass der Bediener über den prognostizierten Verschleißverlauf der Häckselmesser informiert ist und entsprechend des prognostizierten Messerverschleißes das erforderliche Schleifen mit den erforderlichen Schleifzyklen bewirken kann. Denkbar ist, das die Anzeige derart erfolgt, dass dem Bediener im Erntebetrieb der jeweilige Gütezustand innerhalb eines definierten Bereichs einer akzeptablen Güte der Messer liegend, visualisiert wird.

Im Falle, dass der prognostizierte Häckselmesserverschleiß einen Bereich einer akzeptablen Mindestgüte der Häckselmesser auf der Basis der Eigenschaften bekannter Häckselmesser überschritten hat, wird ein optisches und/oder akustisches Warnsignal gegeben, so dass der Bediener gewarnt ist, dass der Häckselbetrieb nunmehr mit Häckselmessern erfolgt, deren Schneidengüte nicht mehr ausreichend ist, was zu erhöhten Betriebskosten führt. Durch die Warnung kann der Bediener die entsprechende Gegenmaßnahme, das erforderliche Schleifen der Messer, einleiten.

In einer weiteren vorteilhaften Ausgestaltung der Erfindung wird aus der in der Speicher- und Auswerteeinheit abgeleiteten Prognose über den Häckselmesserverschleiß ein erforderliches Schleifintervall und eine Anzahl von erforderlichen Schleifzyklen generiert, so dass insbesondere der ungeübte Bediener nicht mehr selbst entscheiden muss, wann der nächste Schleifvorgang mit einer erforderlichen Anzahl von Schleifzyklen aktiviert werden muss. In der Regel wird der Schleifvorgang spätestens dann gestartet, wenn die vorab definierte Verschleißgrenze erreicht ist. Denkbar ist, dass der Wert für die erforderliche Anzahl von Schleifzyklen während eines Schleifvorgangs auf Expertenwissen beruht oder manuell durch den Bediener festgelegt wird, so dass einerseits ungeübte Bediener entlastet werden und andererseits erfahrene Bediener ihre Kenntnis bezüglich der erforderlichen Schleifintensität mit einbringen können. Vorteilhaft wird das jeweils erforderliche Schleifintervall und die erforderliche Anzahl von Schleifzyklen auf einer Anzeigeeinheit zur Anzeige gebracht, so dass der Bediener entsprechend informiert ist und das jeweils erforderliche Schleifen der Häckselmesser bewirken kann.

In einer weiteren Ausgestaltung der Erfindung ist vorgesehen, dass eine mit der Speicher- und Auswerteeinheit in Verbindung stehende Steuer- und Regeleinheit den Schleifvorgang zum Schleifen der Häckselmesser auf Basis des prognostizierten Häckselsmesserverschleißes automatisch auslöst. Es ist zudem denkbar, dass die Steuer- und Regeleinheit eingerichtet ist, den jeweiligen Schleifvorgang unter Berücksichtigung der örtlichen Position der Erntemaschine zu aktivieren, so dass vorteilhaft der erforderliche Schleifvorgang dann aktiviert wird, wenn die Erntemaschine sich während des Arbeitsbetriebs nicht im Häckselbetrieb befindet und somit der Ernteprozess vorteilhaft nicht unterbrochen werden muss.

Dadurch, dass beim Überschreiten des erforderlichen Schleifintervalls ein optisches und/oder akustisches Warnsignal gegeben wird, ist der Bediener gewarnt und kann entsprechend das notwendige Schleifen der Häckselmesser bewirken.

Weitere vorteilhafte Ausgestaltungen der Erfindung sind Gegenstand weiterer Unteransprüche und nachfolgend anhand von Zeichnungen näher erläutert.

Es zeigen:
- Figur 1:: einen selbstfahrenden Feldhäcksler mit einem Vorsatzgerät und einer Schleifvorrichtung in Seitenansicht und Schnittdarstellung
- Figur 2:: eine Basisanzeigefläche einer Anzeigeeinheit mit diversen Funkti- onsfenstern zur Darstellung von Erntegut- und/oder Maschinenpa- rameter
- Figur 3:: eine Basisanzeigefläche einer Anzeigeeinheit mit einem Funkti- onsfenster zur Darstellung einer Prognose eines zu erwartenden Häckselmesserverschleißes

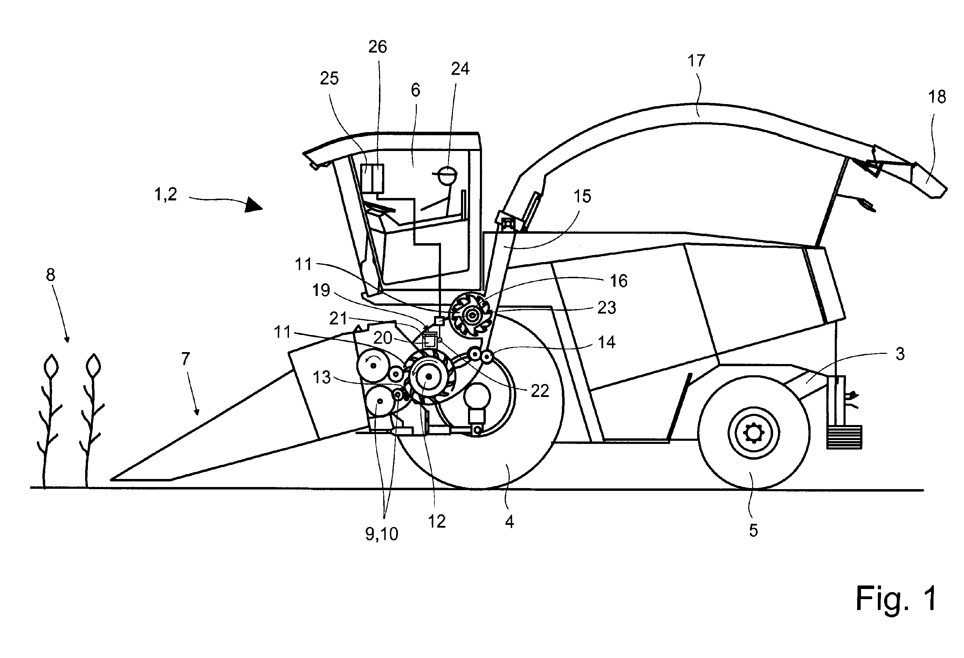

Figur 1 zeigt eine als selbstfahrender Feldhäcksler 1 ausgeführte landwirtschaftliche Erntemaschine 2 in Seitenansicht und Schnittdarstellung. Diese baut sich auf einen Rahmen 3 auf, der von vorderen und rückwärtigen Rädern 4, 5 getragen wird. Die Bedienung des Feldhäckslers 1 erfolgt von der Fahrerkabine 6 aus, von der aus, das dem Feldhäcksler 1 frontseitig zugeordnete Vorsatzgerät 7 einsehbar ist, welches im Arbeitsbetrieb des Feldhäckslers 1 Erntegut 8 aufnimmt, schneidet und es den nachgeordneten Einzugs- und Vorpresswalzen 9, 10 zuführt. Die Einzugs- und Vorpresswalzen 9, 10 leiten das Erntegut 8 der nachgeordneten und rotierenden mit Messern 11 besetzte Häckseltrommel 12 zu, welche das Erntegut 8 an einer Gegenschneide 13 zerkleinert. Das zerkleinerte Erntegut 8 wird sodann an eine Nachzerkleinerungseinrichtung 14 übergeben, die die Erntegutkörner, wie beispielsweise Mais, anschlägt und über einen Förderschacht 15 an einen Nachbeschleuniger 16 übergibt. Der Nachbeschleuniger 16 beschleunigt das zerkleinerte Erntegut 8 und fördert es über einen horizontal und vertikal verstellbaren Auswurfkrümmer 17 und eine diesem verschwenkbar zugeordnete Auswurfkrümmerklappe 18 zur Regelung der Erntgutstrahlweite auf eine nicht abgebildete, dem Auswurfkrümmer 17 zugeordnete Transportvorrichtung.

Um die Messer 11 der Häckseltrommel 12 schärfen zu können, ohne den Ausbau der einzelnen Messer 11 bzw. den Ausbau der Häckseltrommel 12 insgesamt vornehmen zu müssen, ist oberhalb der Häckseltrommel 12 eine an sich bekannte Schleifvorrichtung 19 vorgesehen, die im Wesentlichen einen Schleifstein 20, eine diesem zugeordnete Schleifsteinhalterung 21 und eine Laufachse 22 umfasst, auf der die Schleifvorrichtung 19 verschiebbar gelagert ist, sowie ein an sich bekannter und hier nicht näher dargestellter Antrieb zum Betreiben der Schleifvorrichtung 19. Dem Antrieb der Schleifvorrichtung 19 ist zu dessen Steuerung und Regelung eine Steuer- und Regeleinheit 23 zugeordnet.

Damit der Bediener 24 vom manuellen Überprüfen der Schneidschärfe der Häckselmesser 11 entlastet und eine Betriebskostenoptimierung ermöglicht wird, ist erfindungsgemäß vorgesehen, dass anhand wenigstens eines während des Erntebetriebes ermittelten Erntegut- und/oder Maschinenparameters eine Prognose über den Verschleiß der Häckselmesser 11 abgeleitet wird.

Im Falle des vorliegenden Ausführungsbeispiels umfasst die Erntemaschine 2 eine Speicher- und Auswerteeinheit 25, in der wenigstens ein Referenz-Vergleichswert hinterlegt ist, der einen zu erwartenden Verschleiß von bekannten Häckselmessern unter Berücksichtigung von Erntegut und/oder Maschinenparameter, insbesondere den Parametern Erntegut, Erntegutdurchsatz und Erntegutschnittlänge darstellt. Dieser Wert basiert in vorteilhafter Weise auf Expertenwissen oder wurde durch Testversuche ermittelt. Der Referenz-Vergleichswert stellt dabei einen Messerverschleißverlauf dar, der von einem Startpunkt bis zu einer Verschleißgrenze der Häckselmesser 11 reicht und einen Bereich einer akzeptablen Schneidengüte, bezogen auf die Schneidschärfe der Häckselmesser 11 auf der Basis der Eigenschaften bekannter Häckselmesser repräsentiert. Die akzeptable Güte der Häckselmesser 11 definiert einen Zustand der Messerschneiden von nicht zu scharf bis nicht zu stumpf, der auf das Ergebnis von Testversuchen und/oder auf Expertenwissen basiert, wobei in diesem Bereich der Häckselprozess in einem Bereich niedriger Betriebskosten durchführbar ist. Vor Aufnahme des Erntebetriebs ist der aktuelle Gütezustand der Häckselmesser 11 als Parameter in der Speicher- und Auswerteeinheit 25 zu hinterlegen. Dies kann manuell über eine nicht näher dargestellte Eingabevorrichtung vorgenommen werden. Es ist auch denkbar, dass geeignete Sensoren, z.B. optische Sensoren, wie eine Kamera, den anfänglichen Gütezustand der Häckselmesser 11 sensieren und ein entsprechend ermittelter Wert in der Speicher- und Auswerteeinheit 25 hinterlegt wird. Es liegt im Rahmen der Erfindung, dass in der Speicher- und Auswerteeinheit 25 eine Vielzahl von Referenz-Vergleichswerten hinterlegt sind, die einen Referenz-Verschleißverlauf von bekannten Häckselmessern 11 unter Berücksichtigung verschiedenster Erntegut- und Maschinenparameter-Kombinationen darstellen und somit eine große Brandbreite an Erntesituation abdeckt.

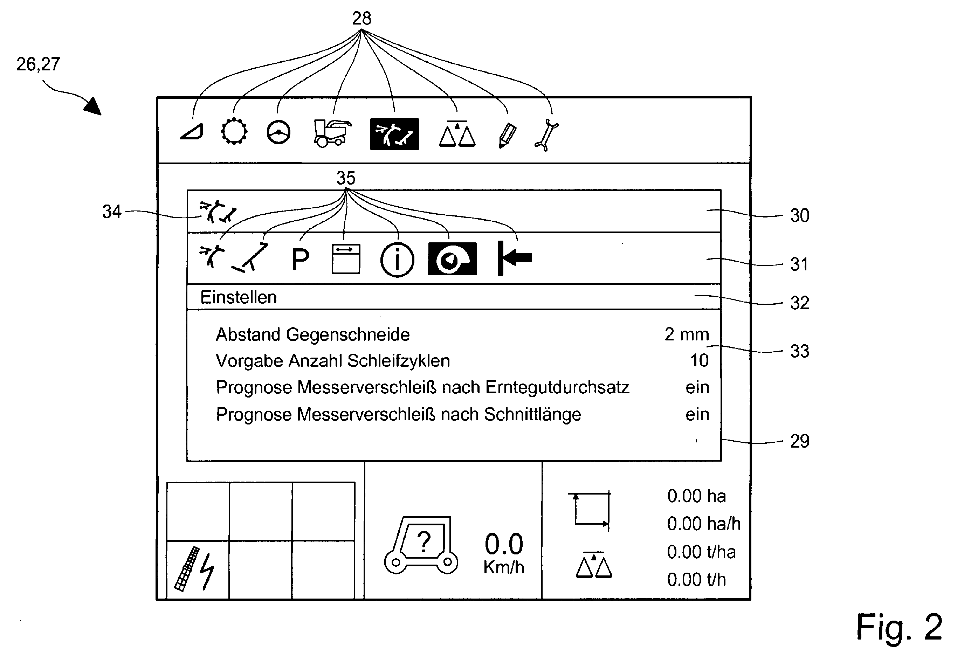

Um nun im Erntebetrieb einen zu erwartenden Verschleiß der Häckselmesser 11 prognostizieren zu können, wird im Ausführungsbeispiel zu Beginn des Erntebetriebs wenigstens ein Verschleißfaktor, hier die Parameter Erntegutart und Erntegutschnittlänge in der Speicher- und Auswerteeinheit 25 hinterlegt. Anhand eines Abgleichs der hinterlegten Referenz-Vergleichswerte und dem wenigstens einen, den aktuellen Erntebetrieb widerspiegelnden Verschleißfaktor, hier im Ausführungsbeispiel die Parameter Erntegutart und Erntegutschnittlänge, berechnet die Speicher- und Auswerteeinheit 25 einen diesen Parametern zugeordneten prognostizierten Häckselmesserverschleiß. Dieser prognostizierte Verschleiß der Häckselmesser 11 wird dem Bediener 24 auf einer in Fig. 2 noch näher darzustellenden, sich in der Fahrerkabine 6 befindenden Anzeigeeinheit 26 zur Anzeige gebracht angezeigt. Sollte der prognostizierte Häckselmesserverschleiß den definierten Bereich der Güte der Häckselmesser 11 überschritten haben, erfolgt ein optisches und/oder akustisches Warnsignal über eine hier nicht näher dargestellte, insbesondere in der Fahrerkabine 6 angeordnete Warnvorrichtung, so dass der Bediener 24 entsprechend informiert ist und das erforderliche Schleifen der Häckselmesser 11 bewirken kann.

In einer weiteren Ausgestaltung der Erfindung ist vorgesehen, dass die durch die Speicher- und Auswerteeinheit 25 abgeleitete Prognose aufgrund von dynamischen, im Erntebetrieb ermittelten Informationen, wie z.B. den Erntegutdurchsatz, der im Erntebetrieb unter Umständen großen Schwankungen unterliegt, bei der zu erstellenden Prognose berücksichtigt werden, so dass die Prognose sehr exakt dem realen Messerverschleiß entspricht. Zur Ermittlung solcher Informationen ist die Erntemaschine 2 mit an sich bekannten und hier nicht näher dargestellten Sensoren ausgestattet. Damit insbesondere das Wissen von erfahrenen Bedienern 24 bei der Ableitung der Prognose berücksichtigt werden kann, ist vorgesehen, dass die Prognose über den Häckselmesserverschleiß manuell korrigierbar ist. Dadurch können insbesondere Parameter berücksichtigt werden, die nicht direkt zu den Erntegut- und/oder Maschinenparametern zählen, wie beispielhaft die Beschaffenheit des Feldbodens, so dass beispielhaft sandige Böden, die zu einem erhöhten Messerverschleiß führen, gleichfalls bei der Prognose berücksichtigt werden.

Alternativ kann die Speicher- und Auswerteeinheit 25 auch mit einer Steuer- und Regeleinheit 23 in Wirkverbindung stehen, die auf Basis des prognostizierten Häckselmesserverschleißes das Schleifen der Häckselmesser 11 automatisch bewirkt. Vorzugsweise erfolgen die Schleifintervalle mit den jeweils erforderlichen Schleifzyklen dann, wenn die vorab definierte Verschleißgrenze erreicht worden ist. In einer weiteren Ausgestaltung lässt sich aufgrund der Anzahl der durchgeführten Schleifintervalle und der Schleifzyklen, die in der Speicher- und Auswerteeinheit 25 widerabrufbar gespeichert werden, eine Prognose erstellen, wann die Häckselmesser 11 einen solchen Verschleiß aufweisen, dass sie ausgetauscht werden müssen. Sollten keine neuen, sondern bereits gebrauchte Häckselmesser 11 eingebaut werden, wird deren aktuelle Güte bei der zu erstellenden Prognose berücksichtigt.

Nach jedem durchgeführten Schleifvorgang werden die gespeicherten Parameter und der zu erwartende Verschleiß in der Speicher- und Auswerteinheit 25 gespeichert, und können als weiterer Referenz-Vergleichswert genutzt werden. Ist ein Schleifvorgang erfolgt, ermittelt die Speicher- und Auswerteeinheit 25 eine neue Prognose über den zu erwartenden Häckselmesserverschleiß, die auf der in der Fahrerkabine 6 angeordneten Anzeigeeinheit 26 angezeigt wird.

In Fig. 2 ist eine Anzeigeeinheit 26 in vergrößerter Darstellung abgebildet. Die Anzeigeeinheit 26 wird von einer Basisanzeigefläche 27 voll ausgefüllt. Dabei sind im oberen Bereich der Basisanzeigefläche 27 verschiedene mit Maschinen- und/oder Erntegutparametem hinterlegte Funktionsfenster 28 angezeigt. Diese müssen nicht gleichzeitig auf der Basisanzeigefläche 27 dargestellt werden, sondern können über Menüs und Untermenüs abrufbar sein, in denen sinnvoll zusammenfassbare Maschinen- und/oder Erntegutparameter zusammengefasst sein können. Die Belegung der einzelnen Funktionsfenster 28 mit Maschinen- und/oder Erntegutparameter ist vom Bediener 24 frei wählbar. Die im Ausführungsbeispiel in der Basisanzeigefläche 27 dargestellten Funktionsfenster 28 sind nicht abschließend und erweiterbar und zeigen emtebetriebsspezifische Maschinen- und/oder Erntegutparameter des sich im Erntebetrieb befindenden Feldhäckslers 1. Die Ansteuerung und Einstellung der in den Funktionsfenster 28 der Basisanzeigefläche 27 hinterlegten Maschinen- und/oder Erntegutparameter erfolgt über hier nicht näher dargestellte Bedienvorrichtungen. Es liegt im Rahmen der Erfindung, dass die Basisanzeigefläche 27 als Touchscreen ausgeführt ist und die Einstellung der Maschinen- und/oder Erntegutparameter darüber erfolgt.

Durch das Anwählen eines Funktionsfensters 28 erfolgt eine andersfarbige Darstellung des Hintergrundes sowie eine separate Visualisierung in einem vergrößerten Funktionsfenster 29. In diesem Funktionsfenster 29 ist das Menü Schleifen der Häckselmesser 11 hinterlegt. In diesem Menü kann der Bediener 24 dann die notwendigen Einstellungen vornehmen oder sich über Zustände informieren. Das Funktionsfenster 29 teilt sich in vier horizontal verlaufende Blöcke 30, 31, 32, 33 auf. Ein erster oberer Block 30 zeigt nochmals das auf der Basisanzeigefläche 27 angewählte Symbol 34, hier ein Symbol 34, dass auf das Schleifen der Häckselmesser 11 hinweist. Der darunter liegende Block 31 umfasst weitere kleinere Funktionsfenster 35 in den wiederum spezielle Funktion und Informationen, das Schleifen der Häckselmesser betreffend, hinterlegt sind. Das angewählte und andersfarbig dargestellte Funktionsfenster 35 dient, um das Untermenu "Einstellen" aufzurufen. Das Untermenu "Einstellen" wird im weiteren Block 32 dargestellt. Im visualisierten Untermenu "Einstellen" sind Grund-Parameter aufgeführt, die vom Bediener 24 bezüglich des Schleifens der Häckselmesser eingestellt werden können. Hier sind beispielhaft die Parameter: Abstand Gegenschneide, Vorgabe Anzahl der Schleifzyklen, Prognose unter Berücksichtigung von Durchsatz und Prognose unter Berücksichtigung von Schnittlänge dargestellt. Bei diesen Parametern handelt es sich um vom Bediener einstellbare Parameter, die bei der Ableitung der Prognose berücksichtigt werden können. Bei den beiden letztgenannten Parametern, insbesondere beim Erntegutdurchsatz handelt es sich um einen dynamischen Parameter, der sich während des Erntebetriebes ständig ändern und deshalb einen Einfluss auf den zu erwartenden Verschleiß der Häckselmesser haben kann. Die Parameter Erntegutdurchsatz und Schnittlänge sind im Ausführungsbeispiel bei der Erstellung der Prognose über den zu erwartenden Verschleiß der Häckselmesser 11 mit berücksichtigt worden.

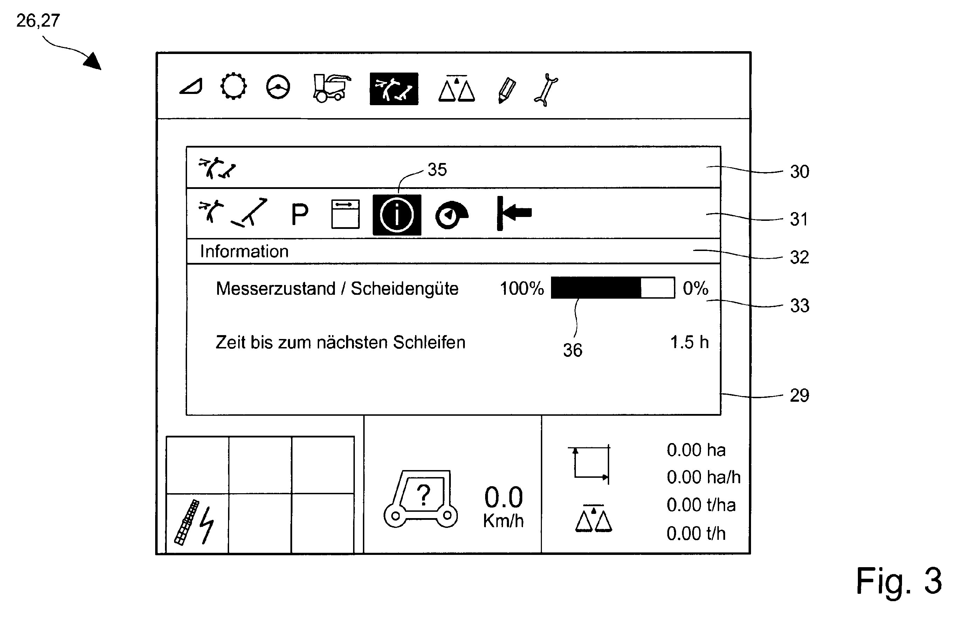

In Figur 3 ist nun im zweiten Block 31 des die Basisanzeigefläche 27 überlagernden Funktionsfensters 29 ein anderes Funktionsfenster 35 angewählt worden, dessen Hintergrund andersfarbig visualisiert ist und Informationen über den Zustand der Häckselmesser zur Anzeige bringt, insbesondere die erfindungsgemäße Prognose über den zu erwartenden Verschleiß der Häckselmesser. Die Darstellung der Prognose über den zu erwartenden Häckselmesserverschleiß erfolgt im vierten Block 33 anhand der Darstellung einer horizontalen Balkenscala 36, die einen Bereich zwischen 100% und 0% definiert, wobei die Scala 36 den Messerzustand für einen Bereich einer akzeptablen Güte der Messerschneiden bezogen auf die Schneidschärfe der Häckselmesser darstellt. Der Wert 100% definiert dabei den optimalen Gütezustand und der Wert 0% einen grenzwertigen Gütezustand der Häckselmesser. Im dargestellten Ausführungsbeispiel befindet sich die Erntemaschine im Erntebetrieb, wobei die aktuelle Prognose den zu erwartenden Messerverschleiß durch einen Gütezustand der Messer von 25% darstellt. Dies bedeutet, dass die Schneidengüte der Häckselmesser 11 noch 25% vom ursprünglichen Zustand, der grundsätzlich dem Zustand geschliffener und unbenutzter Messer entspricht, beträgt. Andere Definitionsmöglichkeiten liegen im Rahmen der Erfindung. Solange der Wert 0% noch nicht erreicht ist, ist der Gütezustand der Messerschneiden noch ausreichend, so dass der Bediener 24 darüber informiert ist, dass der Häckselprozess in einem Bereich optimierter Betriebskosten betrieben werden kann. Der Bediener 24 ist anhand dieser Prognosedarstellung über den zu erwartenden Verschleißverlauf der Häckselmesser 11 informiert und kann entsprechend das Nachschleifen der Häckselmesser 11 bewirken kann. Das manuelle Überprüfen der Messerschärfe ist nicht notwendig. Im Weiteren zeigt das Funktionsfenster 29 im vierten Block 33 dem Bediener 24 die noch verbleibende Zeit bis zum nächsten erforderlichen Schleifen der Häckselmesser 11 an, basierend auf der Prognose über den zu erwartenden Verschleiß der Häckselmesser, wobei mit abnehmenden Gütezustand der Häckselmesser, sich gleichfalls die Zeit bis zum nächsten erforderlichen Schleifen der Häckselmesser verkürzt und wenn der Gütezustand den Restwert 0% erreicht hat, gleichfalls die Zeit bis zum nächsten Schleifen den Wert 0 aufweist. Ist das Zeitintervall abgelaufen, erfolgt hier nicht näher dargestellt, ein optisches und/oder akustisches Warnsignal. Der Bediener 24 kann natürlich auch vor Erreichen der Mindestgüte, den Schleifvorgang zum Schleifen der Häckselmesser aktivieren, insbesondere, um eine Position der Erntemaschine 2 für das Schleifen Häckselmesser 11 zu nutzen, in der die Erntemaschine 2 sich nicht im Erntebetrieb befindet, z.B. die Fahrt im Vorgewende, so dass vorteilhaft der Ernteprozess nicht unterbrochen werden muss. Denkbar ist zudem, dass die Darstellung der Prognose über den zu erwartenden Verschleiß der Häckselmesser permanent auf der Basisanzeigefläche 27 der Anzeigeeinheit 26 zur Anzeige gebracht wird, damit der Bediener 24 permanent über den zu erwartenden Verschleiß der Häckselmesser informiert ist und entsprechend reagieren kann.

Es liegt im Rahmen des Könnens eines Fachmanns die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste

- 1: Feldhäcksler
- 2: Landwirtschaftliche Erntemaschine
- 3: Rahmen
- 4: Räder
- 5: Räder
- 6: Fahrerkabine
- 7: Vorsatzgerät
- 8: Erntegut
- 9: Vorpresswalze
- 10: Vorpresswalze
- 11: Häckselmesser
- 12: Häckseltrommel
- 13: Gegenschneide
- 14: Nachzerkleinerungseinrichtung
- 15: Förderschacht
- 16: Nachbeschleuniger
- 17: Auswurfkrümmer
- 18: Auswurfkrümmerklappe
- 19: Schleifvorrichtung
- 20: Schleifstein
- 21: Schleifsteinhalterung
- 22: Laufachse
- 23: Steuer- und Regeleinheit
- 24: Bediener
- 25: Speicher- und Auswerteeinheit
- 26: Anzeigeeinheit
- 27: Basisanzeigefläche
- 28: Funktionsfenster
- 29: Funktionsfenster
- 30: Block
- 31: Block
- 32: Block
- 33: Block
- 34: Symbol
- 35: Funktionsfenster
- 36: Balkenscala

## Patentansprüche

1. Landwirtschaftliche Erntemaschine, insbesondere ein selbstfahrender Feldhäcksler, mit einer Häckselmesser aufweisenden Häckseltrommel, einer der Häckseltrommel zugeordneten, mittels eines Antriebes antreibaren Schleifvorrichtung mit einem Schleifwerkzeug zum Schleifen der Häckselmesser ,
**dadurch gekennzeichnet, dass**
wenigstens eine Speicher- und Auswerteeinheit (25) vorgesehen ist, die anhand wenigstens eines während des Erntebetriebes ermittelten Erntegut- und/oder Maschinenparameters eine Prognose über den zu erwartenden Verschleiß der Häckselmesser (11) ableitet.

2. Landwirtschaftliche Erntemaschine nach Anspruch 1,
**dadurch gekennzeichnet, dass**
in der Speicher- und Auswerteeinheit (25) wenigstens ein Referenz-Verschleißwert für den Häckselmesserverschleiß weiderabrufbar hinterlegt ist, der durch zumindest einen Erntegut- und/oder Maschinenparameter ermittelt wird, wobei der Referenz-Verschleißwert einen Startpunkt und eine Verschleißgrenze der Häckselmesser (11) berücksichtigt, die einen Bereich einer akzeptablen Mindestgüte der Häckselmesser (11) auf der Basis der Eigenschaften bekannter Häckselmesser (11) repräsentiert.

3. Landwirtschaftliche Erntemaschine nach einem der vorhergehenden Ansprüche,
**dadurch gekennzeichnet, dass**
der zumindest eine zur Ermittlung des Referenz-Verschleißwertes dienende Erntegut- und/oder Maschinenparameter wenigstens einen der Parameter Erntegutart und/oder Erntegutdurchsatz und/oder die gewählte Erntegutschnittlänge umfasst.

4. Landwirtschaftliche Erntemaschine nach einem der vorhergehenden Ansprüche,
**dadurch gekennzeichnet, dass**
der Referenz-Verschleißwert auf Expertenwissen beruht.

5. Landwirtschaftliche Erntemaschine (2) nach Anspruch 1,
**dadurch gekennzeichnet, dass**
der in einer Speicher- und Auswerteeinheit (25) hinterlegte Referenz-Verschleißwert durch wenigstens einen, den aktuellen Erntebetrieb berücksichtigenden Verschleißfaktor korrigiert wird.

6. Landwirtschaftliche Erntemaschine nach einem der vorhergehenden Ansprüche,
**dadurch gekennzeichnet, dass**
der Verschleißfaktor wenigstens einen der Parameter Erntegutart und/oder Erntegutdurchsatz und/oder Erntegutschnittlänge berücksichtigt.

7. Landwirtschaftliche Erntemaschine (2) nach einem der vorhergehenden Ansprüche,
**dadurch gekennzeichnet, dass**
die durch die Speicher- und Auswerteeinheit (25) abgeleitete Prognose für den Häckselmesserverschleiß aufgrund von dynamischen, im Erntebetrieb ermittelten Informationen korrigierbar ist.

8. Landwirtschaftliche Erntemaschine (2) nach einem der vorhergehenden Ansprüche,
**dadurch gekennzeichnet, dass**
die dynamische Information wenigstens einen Erntegut- und/oder Maschinenparameter und/oder sonstige sich während des Erntebetriebs ändernde Parameter erfasst.

9. Landwirtschaftliche Erntemaschine (2) nach einem der vorhergehenden Ansprüche,
**dadurch gekennzeichnet, dass**
über eine mit der Speicher- und Auswerteeinheit (25) in Verbindung stehendes Eingabemittel die abgeleitete Prognose manuell korrigierbar ist.

10. Landwirtschaftliche Erntemaschine (2) nach einem der vorhergehenden Ansprüche,
**dadurch gekennzeichnet, dass**
die abgeleitete Prognose für den Häckselmesserverschleiß dem Bediener (24) auf einer in einer Fahrerkabine (6) der Erntemaschine (2) angeordneten Anzeigeeinheit (26) zur Anzeige gebracht wird.

11. Landwirtschaftliche Erntemaschine (2) nach einem der vorhergehenden Ansprüche,
**dadurch gekennzeichnet, dass**
wenn der prognostizierte Häckselmesserverschleiß einen Bereich einer akzeptablen Güte der Häckselmesser (11) auf der Basis der Eigenschaften bekannter Häckselmesser (11) überschritten hat, ein optisches und/oder akustisches Warnsignal gegeben wird.

12. Landwirtschaftliche Erntemaschine (2) nach einem der vorhergehenden Ansprüche,
**dadurch gekennzeichnet, dass**
die Speicher- und Auswerteeinheit (25) aus der abgeleiteten Prognose für den Häckselmesserverschleiß ein erforderliches Schleifintervall und eine Anzahl von erforderlichen Schleifzyklen generiert.

13. Landwirtschaftliche Erntemaschine (2) nach einem der vorhergehenden Ansprüche,
**dadurch gekennzeichnet, dass**
das erforderliche Schleifintervall und die erforderliche Anzahl von Schleifzyklen auf der Anzeigeeinheit (26) zur Anzeige gebracht werden.

14. Landwirtschaftliche Erntemaschine (2) nach einem der vorhergehenden Ansprüche,
**dadurch gekennzeichnet, dass**
beim Nichteinhalten des erforderlichen Schleifintervalls ein optisches und/oder akustisches Warnsignal gegeben wird.

15. Landwirtschaftliche Erntemaschine (2) nach einem der vorhergehenden Ansprüche,
**dadurch gekennzeichnet, dass**
eine mit der Speicher- und Auswerteeinheit (25) in Verbindung stehende Steuer- und Regeleinheit (23) den Schleifvorgang zum Schleifen der Häckselmesser (11) entsprechend der auf den prognostizierten Häckselmesserverschleiß basierenden erforderlichen Schleifintervalle automatisch aktiviert.

16. Landwirtschaftliche Erntemaschine (2) nach einem der vorhergehenden Ansprüche,
**dadurch gekennzeichnet, dass**
dass die landwirtschaftliche Erntemaschine (2) ein selbstfahrender Feldhäcksler (1) ist.

## Claims

1. An agricultural harvesting machine, in particular a self-propelled forage harvester, comprising a chopping drum having chopping blades, and a grinding device associated with the chopping drum and drivable by means of a drive, with a grinding tool for grinding the chopping blades,
**characterised in that** there is provided at least one storage and evaluation unit (25) which derives a prognosis about the wear to be expected of the chopping blades (11) on the basis of at least one crop material and/or machine parameter which is determined during the harvesting operation.

2. An agricultural harvesting machine according to claim 1 **characterised in that** at least one reference wear value for the chopping blade wear is retrievably stored in the storage and evaluation unit (25), said reference wear value being ascertained by at least one crop material and/or machine parameter, wherein the reference wear value takes account of a start point and a wear limit of the chopping blades (11), which represents a range of an acceptable minimum quality of the chopping blades (11) on the basis of the properties of known chopping blades (11).

3. An agricultural harvesting machine according to one of the preceding claims **characterised in that** the at least one crop material and/or machine parameter serving to ascertain the reference wear value includes at least one of the parameters kind of crop material and/or through-put of crop material and/or the selected crop material cut length.

4. An agricultural harvesting machine according to one of the preceding claims **characterised in that** the reference wear value is based on expert knowledge.

5. An agricultural harvesting machine (2) according to claim 1 **characterised in that** the reference wear value stored in a storage and evaluation unit (25) is corrected by at least one wear factor which takes account of the current harvesting operation.

6. An agricultural harvesting machine according to one of the preceding claims **characterised in that** the wear factor takes account of at least one of the parameters kind of crop material and/or through-put of crop material and/or crop material cut length.

7. An agricultural harvesting machine (2) according to one of the preceding claims **characterised in that** the prognosis derived by the storage and evaluation unit (25) for the chopping blade wear can be corrected on the basis of dynamic information ascertained in the harvesting operation.

8. An agricultural harvesting machine (2) according to one of the preceding claims **characterised in that** the dynamic information includes at least one crop material and/or machine parameter and/or other parameters which change during the harvesting operation.

9. An agricultural harvesting machine (2) according to one of the preceding claims **characterised in that** the derived prognosis can be manually corrected by way of an input means connected to the storage and evaluation unit (25).

10. An agricultural harvesting machine (2) according to one of the preceding claims **characterised in that** the derived prognosis for the chopping blade wear is displayed to the operator (24) on a display unit (26) arranged in a driving cab (6) of the harvesting machine (2).

11. An agricultural harvesting machine (2) according to one of the preceding claims **characterised in that** if the prognosticated chopping blade wear has exceeded a range of an acceptable quality of the chopping blades (11) on the basis of the properties of known chopping blades (11) an optical and/or acoustic warning signal is given.

12. An agricultural harvesting machine (2) according to one of the preceding claims **characterised in that** the storage and evaluation unit (25) generates a required grinding interval and a number of required grinding cycles from the derived prognosis for the chopping blade wear.

13. An agricultural harvesting machine (2) according to one of the preceding claims **characterised in that** the required grinding interval and the required number of grinding cycles are displayed on the display unit (26).

14. An agricultural harvesting machine (2) according to one of the preceding claims **characterised in that** an optical and/or acoustic warning signal is given when the required grinding interval is not observed.

15. An agricultural harvesting machine (2) according to one of the preceding claims **characterised in that** a control and regulating unit (23) connected to the storage and evaluation unit (25) automatically activates the grinding operation for grinding the chopping blades (11) in accordance with the required grinding interval based on the prognosticated chopping blade wear.

16. An agricultural harvesting machine (2) according to one of the preceding claims **characterised in that** the agricultural harvesting machine (2) is a self-propelled forage harvester (1).

## Revendications

1. Moissonneuse agricole, en particulier une ramasseuse-chargeuse automotrice comprenant un tambour hacheur présentant une lame hacheuse, un dispositif de meulage qui peut être entraîné au moyen d'un entraînement, attribué au tambour hacheur, comportant un outil de meulage pour meuler la lame hacheuse,
**caractérisée en ce qu'**on prévoit au moins une unité de mémoire et d'évaluation (25) qui déduit, par référence à au moins un paramètre de produit de la moisson et/ou de machine déterminé lors du déroulement de la moisson, un pronostic concernant l'usure à attendre de la lame hacheuse (11).

2. Moissonneuse agricole selon la revendication 1, **caractérisée en ce qu'**on dépose, dans l'unité de mémoire et d'évaluation (25), de manière à pouvoir y accéder par la suite, au moins une valeur d'usure de référence pour l'usure de la lame hacheuse qui est déterminée par au moins un paramètre de produit de la moisson et/ou de machine, la valeur d'usure de référence prenant en compte un point de départ et une limite d'usure de la lame hacheuse (11), qui représente une plage d'une qualité minimale acceptable de la lame hacheuse (11) sur base des propriétés de lames hacheuses connues (11).

3. Moissonneuse agricole selon l'une quelconque des revendications précédentes, **caractérisée en ce que** ledit au moins un paramètre de produit de la moisson et/ou de machine qui sert à la détermination de la valeur d'usure de référence comprend au moins un paramètre choisi parmi le groupe comprenant le type de produit de la moisson et/ou le débit de produit de la moisson et/ou la longueur de coupe sélectionnée du produit de la moisson.

4. Moissonneuse agricole selon l'une quelconque des revendications précédentes, **caractérisée en ce que** la valeur d'usure de référence s'appuie sur des expertises.

5. Moissonneuse agricole (2) selon la revendication 1, **caractérisée en ce qu'**on corrige la valeur d'usure de référence déposée dans une unité de mémoire et d'évaluation (25) via au moins un facteur d'usure qui prend en compte le déroulement de la moisson en vigueur.

6. Moissonneuse agricole selon l'une quelconque des revendications précédentes, **caractérisée en ce que** le facteur d'usure prend en compte au moins un paramètre choisi parmi le groupe comprenant le type de produit de la moisson et/ou le débit de produit de la moisson et/ou la longueur de coupe du produit de la moisson.

7. Moissonneuse agricole (2) selon l'une quelconque des revendications précédentes, **caractérisée en ce que** le pronostic pour l'usure de la lame hacheuse, déduit via l'unité de mémoire et d'évaluation (25), peut être corrigé sur base d'informations dynamiques déterminées lors du déroulement de la moisson.

8. Moissonneuse agricole (2) selon l'une quelconque des revendications précédentes, **caractérisée en ce que** les informations dynamiques comprennent au moins un paramètre du produit de la moisson et/ou de la machine et/ou d'autres paramètres qui se modifient lors du déroulement de la moisson.

9. Moissonneuse agricole (2) selon l'une quelconque des revendications précédentes, **caractérisée en ce que** le pronostic déduit peut faire l'objet d'une correction manuelle via un moyen d'entrée mis en liaison avec l'unité de mémoire et d'évaluation 25.

10. Moissonneuse agricole (2) selon l'une quelconque des revendications précédentes, **caractérisée en ce que** le pronostic déduit pour l'usure de la lame hacheuse est indiqué à l'utilisateur (24) sur une unité d'affichage (26) disposée dans une cabine (6) de la moissonneuse (2).

11. Moissonneuse agricole (2) selon l'une quelconque des revendications précédentes, **caractérisée en ce que**, lorsque l'usure pronostiquée de la lame hacheuse a dépassé une plage d'une qualité acceptable de la lame hacheuse (11) sur base des propriétés de lames hacheuses connues (11), un signal d'avertissement optique et/ou acoustique se manifeste.

12. Moissonneuse agricole (2) selon l'une quelconque des revendications précédentes, **caractérisée en ce que** l'unité de mémoire et d'évaluation (25), à partir du pronostic déduit pour l'usure de la lame hacheuse, génère un intervalle de meulage requis et un nombre de cycles de meulage requis.

13. Moissonneuse agricole (2) selon l'une quelconque des revendications précédentes, **caractérisée en ce que** l'intervalle de meulage requis et le nombre requis de cycles de meulage s'affichent sur l'unité d'affichage (26).

14. Moissonneuse agricole (2) selon l'une quelconque des revendications précédentes, **caractérisée en ce que**, en cas de non-respect de l'intervalle de meulage requis, un signal d'avertissement optique et/ou acoustique se manifeste.

15. Moissonneuse agricole (2) selon l'une quelconque des revendications précédentes, **caractérisée en ce qu'**une unité de commande et de réglage (23) mise en relation avec l'unité de mémoire et d'évaluation (25) active automatiquement le processus de meulage pour le meulage de la lame hacheuse (11) de manière correspondante aux intervalles de meulage requis en se basant sur l'usure pronostiquée de la lame hacheuse.

16. Moissonneuse agricole (2) selon l'une quelconque des revendications précédentes, **caractérisée en ce que** la moissonneuse agricole (2)est une ramasseuse-chargeuse automotrice (1).
